# EUROPÄISCHE PATENTANMELDUNG

(11) **EP 1 650 446 A2**
(43) Veröffentlichungstag der Anmeldung: **26.04.2006**
(21) Anmeldenummer: 05022223.1
(22) Anmeldetag: 12.10.2005
(51) Int. Cl.: F16B 25/00, F16B 33/02

(54) **Verbindungselement mit Aussengewinde, insbesondere Spanplattenschraube**

(30) Priorität: 19.10.2004 DE 102004051082
(71) Anmelder: Battenfeld, Friedrich, 59964 Medebach (DE)
(72) Erfinder: Battenfeld, Friedrich, 59964 Medebach (DE)
(74) Vertreter: Graefe, Jörg

(57) **Zusammenfassung**

Verbindungselement, insbesondere Spanplattenschraube mit einem Schraubenschaft (2), wobei sich von einer Spitze (3) des Schraubenschafts (2) ausgehend ein eingängiges oder mehrgängiges Gewinde (4) erstreckt und wobei ein Kerndurchmesser (d₁) des Schraubenschafts (2) in einem ersten sich an die Spitze (3) anschließenden Bereich (5) größer ist als der Kerndurchmesser (d₂) in einem sich in zur Spitze (3) gegenüberliegenden Ende anschließenden zweiten Bereich (6) des Schraubenschafts, wobei der Außendurchmesser (d_{A}) im ersten Bereich (5) und im zweiten Bereich (6) mindestens gleich groß ist.

## Beschreibung

Die Erfindung betrifft ein Verbindungselement, insbesondere Spanplattenschraube mit einem Schraubenschaft, wobei sich von einer Spitze des Schraubenschafts ausgehend ein eingängiges oder mehrgängiges Gewinde erstreckt und wobei ein Kerndurchmesser des Schraubenschafts in einem ersten sich an die Spitze anschließenden Bereich größer ist als der Kerndurchmesser in einem sich in Richtung zu der Spitze gegenüberliegenden Ende anschließenden zweiten Bereich des Schraubenschafts.

Eine Spanplattenschraube dieser Art ist beispielsweise aus der Druckschrift DE 196 11 678 A1 bekannt. Bei der in dieser Druckschrift gezeigten Schraube ist nicht nur der Kerndurchmesser in dem ersten sich an die Spitze anschließenden Bereich vergrößert, sondern auch der Außendurchmesser der Schraube in diesem ersten Bereich gegenüber dem Außendurchmesser im zweiten Bereich verkleinert.

Durch den vergrößerten Kerndurchmesser des ersten Bereichs wird beim Einschrauben der Spanplattenschraube das Kernloch in der Spanplatte größer ausgebildet als es eigentlich notwendig wäre. Der zweite Abschnitt der Spanplattenschraube kann dann einfacher durch dieses aufgeweitete Kernloch in die Spanplatte eingeschraubt werden. Die Reibung wird dadurch verringert. Andererseits muss der Gewindegang im zweiten Bereich weiteres Material nach außen verdrängen, da der Gewindegang im ersten Bereich einen geringeren Außendurchmesser hat. Der Vorteil wird dadurch zum Teil kompensiert.

Vor dem Hintergrund der aus dem Stand der Technik bekannten Spanplattenschrauben liegt der Erfindung die Aufgabe zugrunde, ein Verbindungselement der eingangs genannten Art so weiterzubilden, dass die Eindrehkraft weiter verringert werden kann. Mit dem Gewindegang des zweiten Bereichs des Gewindes soll zum Beispiel keine weitere Aufweitung des Loches in der Spanplatte erfolgen.

Diese Aufgabe wird erfindungsgemäß dadurch gelöst, dass der Außendurchmesser im ersten Bereich und im zweiten Bereich gleich groß ist. Konkretisierungen und Fortbildungen dieses erfindungsgemäßen Verbindungselements sind in den vom Anspruch 1 abhängigen Unteransprüchen angegeben.

Ein erfindungsgemäßes Verbindungselement kann beispielsweise so ausgebildet sein, dass im ersten Bereich die Gewindespitzen abgeflacht sind. Damit ist es möglich, trotz des angehobenen Kerndurchmessers den gleichen Außendurchmesser zu gewährleisten. Die Gewindeflanken im ersten Bereich und im zweiten Bereich können vorzugsweise gleich steil sein. Ebenso ist es möglich, dass der Gewindegang im ersten Bereich und im zweiten Bereich eine gleiche Breite hat.

Der Grund des Gewindegangs kann im Querschnitt ein dreieckiges oder bogenförmiges beziehungsweise gewölbtes Profil haben.

Außerdem ist die ein erfindungsgemäßes Verbindungselement vorteilhaft so ausgebildet, dass das Materialvolumen bezogen auf die Länge der Schraube im ersten Bereich größer ist als im zweiten Bereich.

Das Gewinde kann ein asymmetrisches oder symmetrisches Profil aufweisen. Das Gewinde kann auch ein sich änderndes Profil haben. Die Flankenwinkel können 30° bis 60° betragen

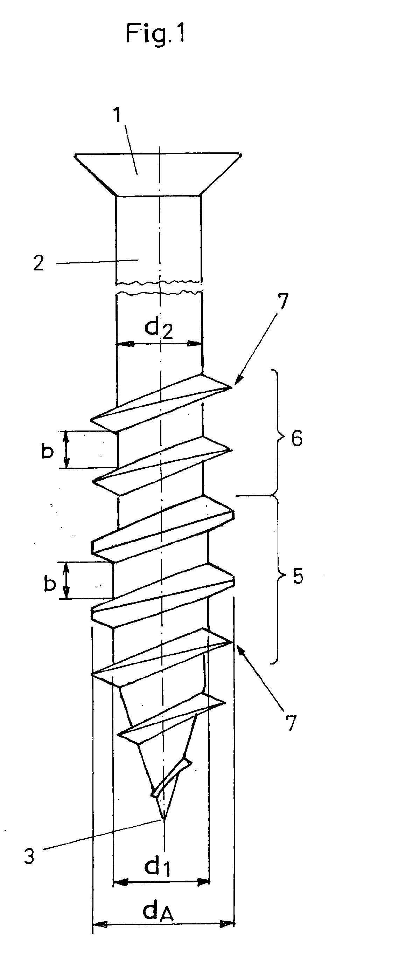

Ein Ausführungsbeispiel für eine erfindungsgemäße Spanplattenschraube ist anhand der Zeichnung näher beschrieben. Darin zeigt
- Fig. 1: eine Seitenansicht der erfindungsgemäßen Spanplattenschraube.

Die in der Fig. 1 dargestellte Spanplattenschraube weist einen Schraubenkopf 1 auf. Dieser Schraubenkopf 1 weist nicht dargestellte Strukturen auf, an welche ein Werkzeug zum Drehen der Spanplattenschraube angesetzt werden kann. An den Schraubenkopf 1 schließt sich ein Schraubenschaft 2 an, der eine Spitze 3 hat. Von der Spitze 3 erstreckt sich ein Gewinde über zumindest einen ersten Bereich 5 und einen zweiten Bereich 6 des Schraubenschafts.

Die Schraube hat sowohl im ersten Bereich 5 als auch im zweiten Bereich 6 einen gleichen Außendurchmesser d_{A}. Dagegen ist der Kerndurchmesser d₁ in dem ersten Bereich 5 größer als der Kerndurchmesser d₂ in dem zweiten Bereich 6. Der Kerndurchmesser d_{A} ist im ersten Bereich 5 also angehoben gegenüber dem übrigen Schraubenschaft. Die Gewindespitzen 7 sind im ersten Bereich 5 abgeflacht, während die Gewindespitzen 7 im zweiten Bereich 6 und in den übrigen Bereichen des Gewindes voll, d. h. dreiecksförmig ausgebildet sind. Die Gewindeflanken sind im ersten Bereich 5 und im zweiten Bereich gleich steil. Außerdem hat der Gewindegang im ersten Bereich 5 und der Gewindegang im zweiten Bereich 6 die gleiche Breite b.

Im Unterschied zu den aus dem Stand der Technik bekannten Schrauben, die einen sich an die Spitze anschließenden ersten Bereich 5 mit einem vergrößerten Kerndurchmesser haben, ist bei der erfindungsgemäßen Spanplattenschraube im ersten Bereich 5 mehr Material vorgesehen als im zweiten Bereich 6 (jeweils bezogen auf einen gleichen Längenabschnitt). Bei den bekannten Schrauben aus dem Stand der Technik ist in den Bereichen pro Längenabschnitt die gleiche Materialmenge verarbeitet worden.

Durch den angehobenen Kerndurchmesser und durch den angehobenen Gewindegang bei gleich bleibendem Außendurchmesser wird beim Einschrauben der Spanplattenschraube in eine Spanplatte zunächst ein Loch gebohrt, bei dem das Material durch den ersten Abschnitt 5 zur Seite verdrängt wird. Das Material der Spanplatte liegt dabei jeweils dicht an dem ersten Bereich 5 der Schraube an. Gelangt dann durch ein weiteres Hineindrehen der Schraube der zweite Bereich 6 in die Spanplatte, kann dieser zweite Bereich 6 ohne große Reibung durch das aufgeweitete Locht bewegt werden. Die für das Einschrauben aufzuwendende Kraft ist dadurch geringer als die Kraft, die bei einer herkömmlichen Spanplattenschraube aufgewendet werden muss. Ist die Spanplattenschraube vollständig in ein Loch eingeschraubt, kann sich das durch den ersten Bereich 5 der Spanplatte aufgeweitete Holz wieder ausdehnen, d. h. gewissermaßen zurückfedern. Das Holz liegt dann, nachdem es sich wieder ausgedehnt hat, dicht an dem zweiten Bereich 6 der Spanplattenschraube an. Zum Herausschrauben der Spanplattenschraube müsste dann eine größere Kraft aufgewendet werden als zum Einschrauben.

## Patentansprüche

1. Verbindungselement, insbesondere Spanplattenschraube mit einem Schraubenschaft (2), wobei sich von einer Spitze (3) des Schraubenschafts (2) ausgehend ein eingängiges oder mehrgängiges Gewinde (4) erstreckt und wobei ein Kerndurchmesser (d₁) des Schraubenschafts (2) in einem ersten sich an die Spitze (3) anschließenden Bereich (5) größer ist als der Kerndurchmesser (d₂) in einem sich in zur Spitze (3) gegenüberliegenden Ende anschließenden zweiten Bereich (6) des Schraubenschafts,
**dadurch gekennzeichnet,**
**dass** der Außendurchmesser (d_{A}) im ersten Bereich (5) und im zweiten Bereich (6) mindestens gleich groß ist.

2. Verbindungselement nach Anspruch 1, **dadurch gekennzeichnet, dass** im ersten Bereich ,(5) Gewindespitzen (7) abgeflacht sind.

3. Verbindungselement nach Anspruch 1 oder 2, **dadurch gekennzeichnet, dass** die Gewindeflanken im ersten Bereich (5) und im zweiten Bereich (6) gleich steil sind.

4. Verbindungselement nach einem der Ansprüche 1 bis 3, **dadurch gekennzeichnet, dass** der Gewindegang im ersten Bereich (5) und im zweiten Bereich eine gleiche Breite (b) haben.

5. Verbindungselement nach einem der Ansprüche 1 bis 4, **dadurch gekennzeichnet, dass** das Gewindeprofil im ersten Bereich um den gleichen Betrag angehoben ist gegenüber dem zweiten Bereich wie der Kerndurchmesser.

6. Verbindungselement nach einem der Ansprüche 1 bis 5, **dadurch gekennzeichnet, dass** das auf die Länge bezogene Materialvolumen im ersten Bereich (5) größer ist als im zweiten Bereich (6).
